(19) Europäisches Patentamt / European Patent Office / Office européen des brevets

(11) EP 2 800 279 B1

(12) **EUROPEAN PATENT SPECIFICATION**

(45) Date of publication and mention
of the grant of the patent:
**25.04.2018 Bulletin 2018/17**

(51) Int Cl.:
*H04B 1/12* *(2006.01)*          *H04B 1/16* *(2006.01)*
*H04H 40/45* *(2008.01)*         *H04H 40/72* *(2008.01)*
*H04N 5/60* *(2006.01)*          *H04N 21/81* *(2011.01)*
*H04N 17/00* *(2006.01)*

(21) Application number: **13166129.0**

(22) Date of filing: **01.05.2013**

(54) **Demodulation of attenuated FM modulated audio signals**

Demodulation von gedämpften FM modulierten Audiosignalen

Démodulation de signaux audio amortie modulés FM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.11.2014 Bulletin 2014/45**

(73) Proprietor: **Analog Devices Global Unlimited
Company
Hamilton (BM)**

(72) Inventors:
 • **Thaly, Amogh
   Bangalore (IN)**
 • **Venkitasubramani, Anand
   695002 Trivandrum (IN)**
 • **Browne, Michael Joseph
   Thurles (IE)**

(74) Representative: **Thompson, Andrew John et al
Withers & Rogers LLP
4 More London Riverside
London SE1 2AU (GB)**

(56) References cited:
EP-A2- 0 377 965          JP-A- 2002 084 140
US-A- 3 979 679           US-A- 4 314 377
US-A- 4 574 390           US-A- 4 680 793
US-A- 5 261 004           US-A1- 2006 229 751
US-A1- 2009 305 653       US-A1- 2010 285 768

**Description**

Technical Field

Embodiments described relate to demodulation of audio signals, such as or example audio signals modulated using frequency modulation.

Background

Audio signals can be transmitted on a carrier signal. For example, the transmitted signal may be a frequency modulation (FM) signal. At a receiver, the signal is received and demodulated to extract the audio signal, and may be provided to an amplifier and a speaker for listening by a user. The audio signal may be, for example, an audio broadcast such as a radio station or may be part of another signal such as a video signal or broadcast television signal.

Various effects may cause noise to be added to the transmitted signal, or cause the transmitted signal to be attenuated. Where the carrier signal is not received by the receiver due to these effects, or is received in attenuated or noisy form, the demodulated audio signal may be noisy or include unpleasant sounds (artefacts) that were not present in the original audio signal before transmission.

US patent number 4,680,793 discloses a noise eliminating circuit that includes a subsignal modulator circuit, a matrix circuit, and sample-and-hold circuits, for reducing signal distortion as well as preventing the in-circuit generation of noise.

US patent publication number 2009/0305653A1 discloses an arctangent detector, which generates a demodulated signal based on the result of an arctangent calculation of the ratio between an in-phase component and a quadrature component obtained from a frequency modulation received signal.

US patent publication number 2006/0229751A1 discloses a signal quality estimation and control system for controlling a signal having noise. The system includes a signal strength determination system which has an input configured to receive the signal and an output configured to output information indicative of the strength of the signal.

US patent number 5,261,004 discloses a noise blanking circuit that processes an AM stereo input signal using an envelope detector, an in-phase detector and a quadrature phase detector to yield outputs which may carry short noise impulses.

Summary of Embodiments

According to a first aspect, certain embodiments provide a method of receiving an audio signal, the method comprising: receiving a modulated signal (302); demodulating the modulated signal to obtain the audio signal (306); detecting attenuation of the received modulated signal; and if attenuation is detected, holding or low pass filtering the audio signal; wherein detecting attenuation of the received modulated signal comprises monitoring an energy level (310) of the received modulated signal and determining if the energy level falls below a first threshold (314), wherein the first threshold is based on an average of the energy level over a first time period, monitoring the energy level comprises monitoring an average value of the energy level over a second time period, and the first time period is longer than the second time period.

As a result, certain embodiments can "clean up" a received signal such as a received frequency modulated (FM) signal so that during periods where the carrier signal and hence the audio signal cannot be fully recovered, the presence of audible noise and/or artefacts in a demodulated audio signal can be reduced or eliminated.

In certain embodiments, detecting attenuation of the received modulated signal comprises monitoring an energy level of the received modulated signal. Detecting attenuation of the received modulated signal may comprise determining if the energy level falls below a first threshold. For certain signals, such as FM signals, this can provide a simple and effective way of determining whether the carrier signal has been significantly or completely attenuated, particularly in modulation schemes where the carrier energy level of the transmitted signal is generally independent of the audio signal being carried. The threshold may be variable or fixed. Where variable, the threshold could be based on an average energy level over a predetermined time period. For example, the threshold could be a fixed proportion of the average energy level.

The holding or filtering of the audio signal may be done until the energy level rises above a second threshold (which may be equal to or different from the first threshold), or may be done for a fixed portion of time, such as 300ns or 400ns for example.

In certain embodiments, monitoring the energy level comprises monitoring an instantaneous value of the energy level. Alternatively, monitoring the energy level comprises monitoring an average value of the energy level over a short time period. The short time period may be shorter than for example the time period over which the average energy level is calculated for the variable threshold, in embodiments where the variable threshold is used.

In certain embodiments, the FM signal is carried on a subcarrier of a video signal. Thus embodiments of the invention may provide an improvement in audio that accompanies the video signal.

The holding or filtering may comprise adding a filter to a signal path. For example, adding a filter to a signal path comprises selecting a path that includes a filter as the signal path. This could comprise for example switching from a first path that does not include a filter to a second path that includes a filter. The filter may be a low pass filter with a cutoff frequency lower (for example at 5.5kHz) than a filter typically used for the output signals depending on the application. For example, for audio signals, the cutoff frequency may be 15kHz or some other value suitable for audio applications. The first path may include a matched delay component that matches a delay of the filter such that switching between the signal paths does not noticeably affect timing of the output audio and does not introduce a noticeable delay.

In certain embodiments, the holding or filtering comprises transitioning between the audio signal and a filtered audio signal over a certain time period. Thus there is no "hard" transition between the two states, and this may avoid further noise or audible artefacts being introduced into the output audio signal.

According to a second aspect, certain embodiments provide an apparatus comprising means for carrying out the first aspect. Therefore, for example, the second aspect may include means for receiving a modulated signal; means for demodulating the modulated signal to obtain the audio signal; means for detecting attenuation of the received modulated signal; and means for holding or filtering the audio signal if attenuation is detected. The apparatus may include a demodulating component such as a FM audio signal demodulator or video signal demodulator, or may include for example a radio, television, set-top box, mobile device such as a laptop, tablet computer or cell phone, or any other device that includes the claimed apparatus or is arranged to carry out the claimed methods.

Brief Description of the Drawings

Embodiments will be described with reference to the accompanying figures, in which:

Figure 1 shows an example of a video signal including a FM audio signal;

Figure 2 shows an example of a modulated FM signal and demodulated audio signal;

Figure 3 shows an example of a first embodiment of a FM audio signal demodulator;

Figure 4 shows an example of a FM demodulation component;

Figure 5 shows an example of various signals in an embodiment of a FM audio signal demodulator;

Figure 6 shows an example of a second embodiment of a FM audio signal demodulator; and

Figure 7 shows an example of a comparator.

Detailed Description of Embodiments

Certain embodiments may provide a method and/or apparatus in which a demodulated FM audio signal is manipulated when the FM carrier signal is partially or completely attenuated. More specifically, when attenuation of the carrier signal is detected, the audio signal can be held or filtered. This may alleviate or eliminate certain noise or artefacts that are present in the demodulated audio signal due to the attenuation of the carrier signal and impaired recoverability of the original audio signal. The resulting audio output signal may be improved such as having reduced overall audible noise and artefacts compared to the demodulated audio signal that has not been manipulated in such a manner.

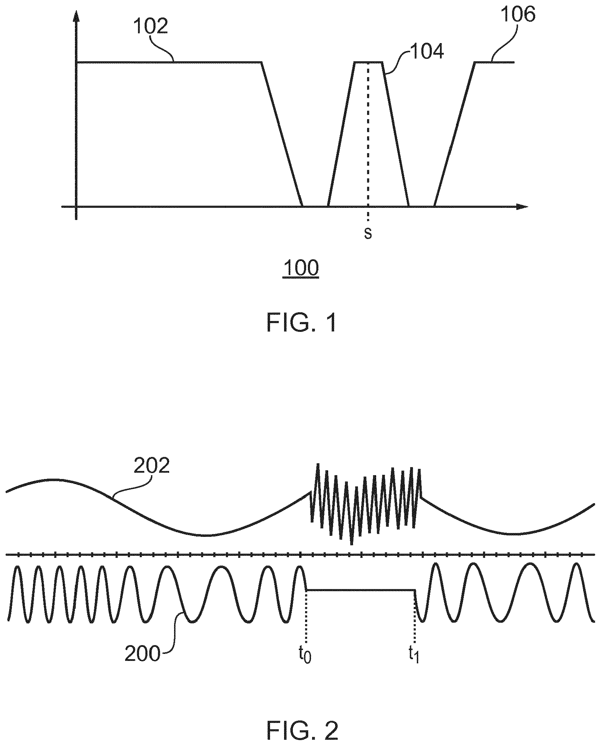

Figure 1 shows a frequency domain representation 100 of a television signal. The television signal has been converted to baseband through one or more receiver stages as will be well known to those skilled in the art. The television signal includes two components, a video portion 102 and an audio portion 104. The video and audio portions are intended to be presented to a viewer simultaneously in real time, though they may alternatively for example be recorded for later viewing.

The audio portion 104 comprises a subcarrier of frequency S frequency modulated by an audio signal that in the described embodiment is intended to be presented to a user simultaneously with the video signal. The audio portion 104 may be subject to one or more effects that cause noise, interference or distortion of the audio portion 104 and thus of the audio signal that can be extracted from it. For example, an adjacent television signal 106 in an adjacent channel is shown in part in Figure 1. Even though the adjacent channel can be removed for example by filtering, it may reside close enough to the audio portion 104 to cause noise, interference or distortion of the audio portion 104. The noise, interference or distortion may cause the carrier signal that carries the audio signal to be partially or fully attenuated in a transmission channel or in a receiver.

Additionally or alternatively, a poorly designed or faulty transmitter may have insufficient bandwidth to effectively transmit the audio portion 104. Figure 2 shows an example of a received frequency modulated (FM) signal 200. Between times $t_0$ and $t_1$, corresponding to a period of high frequency of the FM signal, the signal is fully attenuated. This may occur if the transmitter has insufficient bandwidth, though may also be a result of noise, interference or distortion. Demodulation of the received FM signal 200 in a receiver produces an audio signal 202. Between times $t_0$ and $t_1$, an audio signal cannot be reliably extracted from the FM signal 200 and noise is produced by the receiver instead. This noise may be audible to a listener. In the example shown in Figure 2, the noise is produced during a portion of the audio signal that would be at high amplitude, which may be a result of a transmitter with insufficient bandwidth or that is faulty. Therefore, the noise present in the demodulated audio signal 202 may be dependent on the content of the audio signal.

Embodiments of the invention recognise that during periods when the audio signal is not reliably received, for example when the carrier signal is partially or fully attenuated, a filtered or held audio signal may be provided in place of a demodulated audio signal. This may reduce or eliminate some or all of the noise or "artefacts" from the demodulated audio signal.

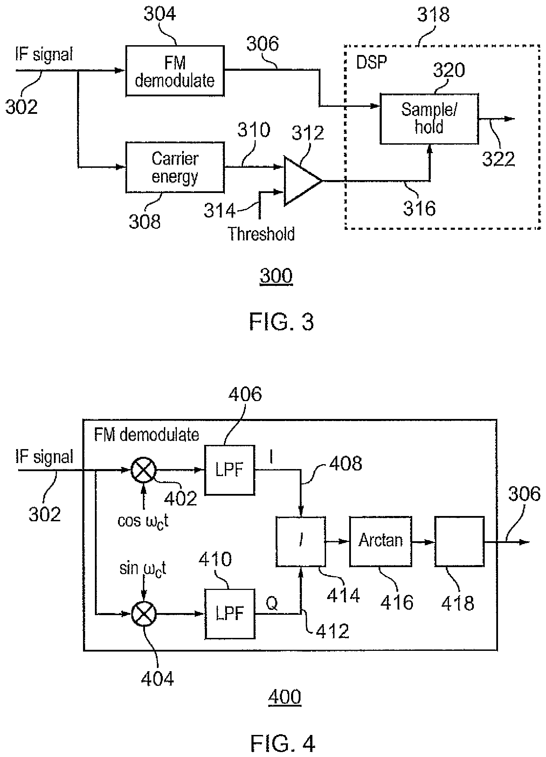

Figure 3 shows a first embodiment of a demodulator 300. The demodulator accepts a received intermediate frequency (IF) signal 302, though the signal may instead be for example a radio frequency (RF) signal. The received IF signal 302 is provided to a FM demodulator 304 that demodulates the signal and produces an audio signal 306, which may include noise or artefacts as indicated above. The IF signal 302 is also provided to a carrier signal energy detector 308, which monitors the energy level of the received IF signal 302. An indication 310 of the carrier energy is provided to a comparator 312, which compares the indication 310 with a threshold 314. The comparator outputs a control signal 316. In certain embodiments, the indication 310 of the carrier energy is a measurement of the instantaneous received carrier energy level.

The audio signal 306 and control signal 316 are provided to a digital signal processor (DSP) 318. The DSP 318 includes processes to implement a sample and hold component 320. The sample and hold component 320 provides as its output 322 the audio signal 306, until the control signal 316 from the comparator 312 is asserted. When this occurs, the output 322 of the sample and hold component 320 is held at the value of the audio signal 306 just before the control signal 316 was asserted.

In some embodiments, the output 322 is held until the carrier energy increases above the threshold, and in other embodiments the output 322 is held for a predetermined period, such as a fixed period. Subsequently, the sample and hold component 320 resumes providing the audio signal 306 as its output 322. The output 322 may be used in other components or processes within the DSP 318, or may be output from the DSP 318 as an audio signal. If a fixed period is used, the period could be 300ns or 400ns for example, or any other time period. Alternatively, the period for which the output 322 is held could be variable based on one or more factors.

In this way, noise and artefacts in the demodulated audio signal 306 that arise due to a partially or completely attenuated carrier signal are considerably reduced and may be eliminated entirely. As a result, the audio signal 322 from the sample and hold component 320 is improved.

Although only certain components are shown within the DSP 318 in Figure 3, any components or parts thereof in the DSP may be implemented in the analog domain where appropriate, and/or any components or parts thereof not shown in the DSP 318 may be implemented in the digital domain where appropriate (for example, implemented within the DSP 318).

Figure 4 shows an example of a FM demodulator 400, which could be for example the FM demodulator 304 shown in Figure 3. The FM demodulator provides an input IF signal 302 to a first mixer 402 and a second mixer 404. The IF signal 302 can be described by the following equation, assuming no noise is present:

$$x(t) = A_c \cos(\omega_c t + k \int m(t) dt) \qquad (1)$$

The first mixer 402 mixes the IF signal 302 with a cosine signal at the carrier frequency and provides the result to a low pass filter 406. The resulting signal 408 can be described as follows:

$$I(t) = A_c \cos(k \int m(t) dt) \qquad (2)$$

The second mixer 404 mixes the IF signal with a sine signal at the carrier frequency and provides the result to a low pass filter 410. The resulting signal 412 can be described as follows:

$$Q(t) = A_c \sin(k \int m(t) dt) \qquad (3)$$

The signals 408 and 412 are provided to divider 414 which divides the signals 408 and 412:

$$Q(t)/I(t) = \tan\left(k\int m(t)dt\right) \qquad (4)$$

The output of the divider is provided to arctan function 416 and differentiator 418 to give an baseband audio signal $m(t)$ at the output 306. Any of the components shown in Figure 4 may be implemented in the analog or digital domain where appropriate, and may be included in the DSP 318 shown in Figure 3.

The energy level monitored by the carrier signal energy detector 308 shown in Figure 3 may be calculated in a number of ways. In one example, the signals $I(t)$ and $Q(t)$ are squared and summed to give $A_c^2$. This can be regarded as an instantaneous energy of the carrier (or proportional thereto) as no previous values are considered. The threshold 314 provided to the comparator 314 may be, for example, a fixed proportion of an expected instantaneous energy level for the received signal, for example $0.25A_e^2$ where $A_e$ is an expected energy level.

In alternative embodiments, the energy level may be a fast-changing average over a small number of samples of the instantaneous energy. For example, the energy level $E$ at time $t$ may be calculated as follows:

$$E(t) = \frac{1}{N}\sum_{n=0}^{N-1}\left(I^2(t-n)+Q^2(t-n)\right) \qquad (5)$$

This provides an average energy level over the last $N$ samples, and may be less sensitive to noise in the measured energy level, which may cause unnecessary triggering of the sample and hold component 320. In one example, where around 64,000 measurements of the instantaneous received carrier energy level are made every second, the value of N may be around 2,000 such that 32 measurements of the instantaneous energy level, averaged over a small number of samples, are determined every second. However, the values of 64,000, 2,000 and 32 are merely illustrative examples and in other embodiments any suitable values may be chosen.

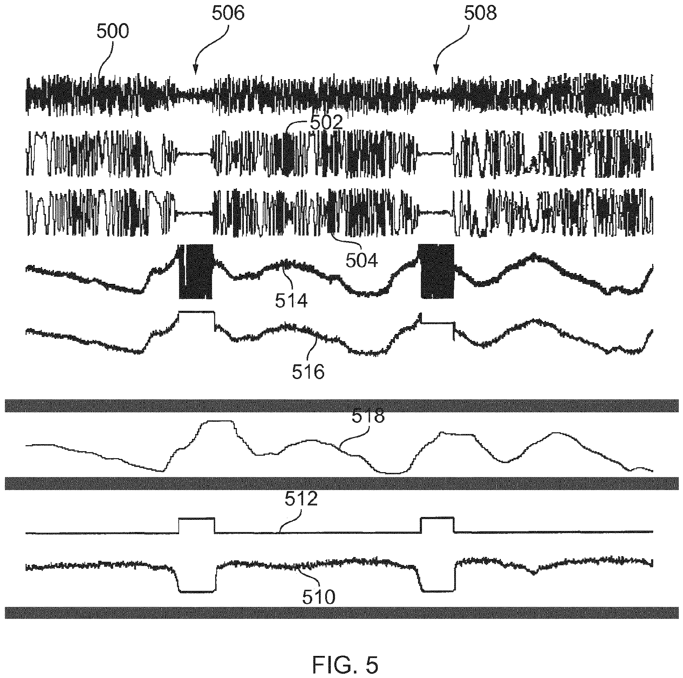

Figure 5 shows an example of a received FM signal 500 carrying an audio signal. Also shown are the signals $I(t)$ 502 and $Q(t)$ 504. It can be seen that in a first time period generally indicated as 506, and also in a second time period generally indicated as 508, the received FM signal suffers from attenuation. The signals 502 and 504 are also attenuated as a result.

The instantaneous energy level 510 is also shown. At the time periods 506 and 508 the level of the signal 510 drops considerably. The output of the comparator 316, being the control signal to the sample and hold component 320, is also shown as signal 512. During the time periods 506 and 508, the control signal 512 is high, indicating that the instantaneous energy level 510 has dropped below the threshold level.

The output audio signal 514 from the FM demodulator 304 is shown as signal 514. At the time periods 506 and 508, a large amount of noise is seen in the audio signal. However, the output 516 from the sample and hold component shows that the audio signal is held at the time periods 506 and 508 and the noise is suppressed. Although during the time periods 506 and 508 the audio signal 516 may differ from the original audio signal before transmission, the resulting noise may be considerably less noticeable to a listener than the noise present in the signal 514.

The signal 516 may be further low pass filtered, for example with a cutoff frequency of 15kHz, to further reduce or eliminate any audible noise or artefacts associated with the signal being held and/or any other noise present in the audio signal 516. The resulting audio signal 518 is shown. The audio signal 518 is free from unintended noise or artefacts that would be present in the audio signal output from the FM demodulator. The audio signal 518 may be an output of a demodulator according to described embodiments.

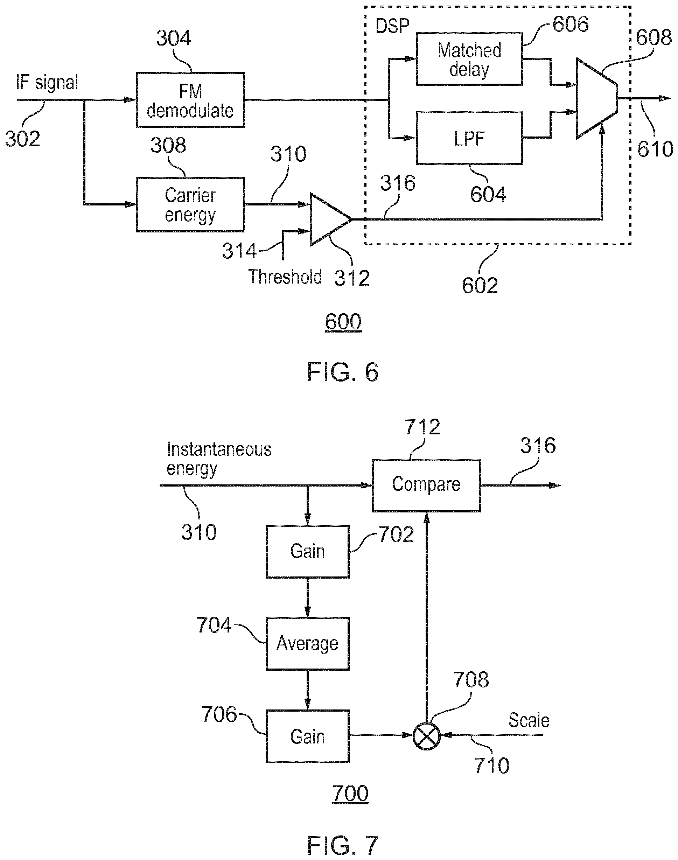

Figure 6 shows an alternative embodiment of a demodulator 600. Components of the demodulator 600 that are similar or identical to those in the demodulator 300 shown in Figure 3 have been given the same reference numerals. Thus the demodulator 600 accepts an input IF signal 302 and provides the signal to a FM demodulator 304 and carrier signal energy detector 308. The FM demodulator 304 provides a demodulated audio signal 306 to a DSP 602. The carrier signal energy detector 308 provides an energy level indication to a comparator 312 that compares the energy level to a threshold 314. The output of the comparator 312 is a control signal 316.

The DSP 602 includes a low pass filter 604 and a matched delay component 606 matched to the delay of a signal through the filter 604. The audio signal 306 is provided to the filter 604 and the matched delay component 606. The outputs of these are both provided to a multiplexer 608, and the output of the multiplexer is audio signal 610.

The multiplexer 608 is controlled by the control signal 316 from the comparator 312. In normal operation, the multiplexer outputs the signal from the matched delay component 606 as the output audio signal 608. When the received IF signal is partially or completely attenuated, thus causing the control signal 312 to be asserted, the multiplexer 608 outputs the signal from the low pass filter 604. As a result, the noise present in the audio signal 306 from the FM demodulator 304 due to attenuation of the received IF signal can be partially, substantially or completely removed from the output audio signal 608 without the low pass filter 604 affecting portions of the audio signal received when the IF signal 302 is stronger. The resulting audio signal may be considered to be of higher quality than the demodulated audio signal 306 and/or the signal 322 produced by the embodiment 300 shown in Figure 3.

The cutoff frequency of the low pass filter 604 may be selected at an appropriate value to remove some or all of the noise or artefacts from the audio signal 306. In the scenario shown in Figure 2, in some cases the amplitude of the audio signal at times $t_0$ and $t_1$ is approximately equal, particularly if attenuation of the FM signal 200 is caused by lack of bandwidth or other faults in the transmitter. Therefore, for a particular frequency of the audio signal 202, the period of time between $t_0$ and $t_1$ may be generally constant. As a result, a typical time period between times $t_0$ and $t_1$ may be selected to be a particular value, for example the average time period or maximum time period according to measurements or expectations. The cutoff frequency of the low pass filter 604 may be selected based on the typical time period. For example, if the typical time period is selected to be 400ns, the low pass filter 604 may have a cutoff frequency of 2.5kHz. Alternatively, for example, if the typical time period is 300ns the cutoff frequency may be 3.33kHz. Other values for the typical time period and/or cutoff frequency are envisaged.

Effectively, the control signal 316 selects whether or not the filter 604 is in the signal path of the demodulated audio signal. In the embodiment shown, the filter 604 is implemented in the digital domain. Therefore, for example, the control signal 316 may control whether an audio signal is provided to a filter function or other software module that implements the filter 604, or controls whether such a function or module is active. In some embodiments the implementation of the low pass filter 604 is a finite impulse response (FIR) filter, though in other embodiments it may be an infinite impulse response (IIR) filter.

The filter 604 remains in the signal path in some embodiments until the detected carrier energy rises above a threshold value (which may or may not be equal to the threshold value below which control signal 316 is activated). In other embodiments, the filter 604 may remain in the signal path for a predetermined time. This time may be based on the expected length of time for a typical period of carrier attenuation, an average or maximum measured value, or some other criteria. For example, the time may be chosen to be 300ns or 400ns. Other time periods are also envisaged.

Although embodiments described above compare the calculated carrier energy level (either instantaneous or an average over a certain period) with a fixed threshold value, this may be unsuitable where the expected energy level of a received FM signal is unknown or may change over time. Factors which may affect the received energy level may include for example noise from adjacent channels and/or movement of a receiver. In certain embodiments, to account for this the threshold value may be a variable value, such as for example a proportion of an average of the received energy level over a certain time period, which may in certain embodiments be longer than the time period used for calculating the carrier energy level in equation (5) above.

Figure 7 shows an example of a comparator 700, which may be used as the comparator 312 shown in Figures 3 and 6, and that enables a variable threshold value. The comparator 700 receives the measured instantaneous energy level 310, for example from the carrier signal energy level detector 308, at a rate of around 64,000 measurements per second. The energy level 310 is provided to a first gain component 702. The gain component 702 multiplies the signal by a fixed value. In some embodiments this value is 8. The resulting value is provided to an averaging component 704 which averages the values from the gain component 702 over a certain time period. In one example, the averaging component 704 averages the values over the last approximately 64,000 values, which may correspond to around one second, though in other embodiments the average may be taken over any number of samples and/or any chosen time period. Thus, in some embodiments, the averaging component provides one value per second of 8x the average instantaneous energy level 310.

The average value is provided to a second gain component 706. In some embodiments, for example, the second gain component 706 provides a gain of 1/256, i.e. divides the average value by 256. The resulting value is provided to a multiplier 708 which also receives a scale value 710. The scale value can be fixed or variable and can be used to control the threshold level against which the instantaneous energy level is compared. For example, in some embodiments, a scale value of 8 will cause the multiplier 708 to output a threshold value which is 0.25x the average instantaneous energy level over the last 64,000 measurements. This threshold value will change with the average energy level but will remain at a fixed proportion of the average energy level provided that the scale value 710 remains fixed.

The instantaneous energy level 310 and the threshold value from the multiplier 708 are provided to a comparator 712 that compares the two values and outputs a control signal 316. For example, the control signal 316 is active when the instantaneous energy level 310 falls below the threshold value.

The comparator 700 may be implemented in the analog or digital domain or a mixture of both as appropriate. This can also be the case for any of the components in any of the embodiments described above including those shown in Figures 3, 4, 6 and/or 7 for example. In addition or alternatively, embodiments of the invention may be applied to both mono and stereo FM audio signals. Though embodiments described above relate to received signals that include both video and audio, other embodiments may relate to audio signals transmitted without an accompanying video signal and/or accompanied by other signals.

In some embodiments, the gain component 702, gain component 706 and/or multiplier 708 may be optional or not present. In some embodiments, therefore, the scale value 710 is optional or not present and the Comparator 712 may compare the instantaneous energy level 310 to a fixed proportion of the average energy level, the proportion not being adjustable by a scale value.

## Claims

1.  A method of receiving an audio signal, the method comprising:

    receiving a modulated signal (302);
    demodulating the modulated signal to obtain the audio signal (306);
    detecting attenuation of the received modulated signal; and
    if attenuation is detected, holding or filtering the audio signal;
    wherein detecting attenuation of the received modulated signal comprises monitoring an energy level (310) of the received modulated signal and determining if the energy level falls below a first threshold (314), wherein the first threshold is based on an average of the energy level over a first time period, monitoring the energy level comprises monitoring an average value of the energy level over a second time period, and the first time period is longer than the second time period.

2.  The method of claim 1, comprising holding or filtering the audio signal until the energy level (310) rises above a second threshold.

3.  The method of claim 1 or 2, comprising holding or filtering the audio signal (306) for a fixed period.

4.  The method of any of the preceding claims, wherein the received modulated signal (302) is a frequency modulated, FM, signal.

5.  The method of claim 4, wherein the FM signal is carried on a subcarrier of a video signal.

6.  The method of any of the preceding claims, wherein holding or filtering comprises adding a filter (604) to a signal path.

7.  The method of claim 6, wherein adding a filter (604) to a signal path comprises selecting a path that includes a filter as the signal path.

8.  The method of any of the preceding claims, wherein the holding or filtering comprises transitioning between the audio signal (306) and a filtered audio signal over a certain time period.

9.  An apparatus for receiving an audio signal, the apparatus comprising: means configured to receive a modulated signal (302); means configured to demodulate the modulated signal to obtain the audio signal (306); means configured to detect attenuation of the received modulated signal; and means configured to hold or filter the audio signal if attenuation is detected; wherein detecting attenuation of the received modulated signal comprises monitoring an energy level (310) of the received modulated signal and determining if the energy level falls below a first threshold (314), wherein the first threshold is based on an average of the energy level over a first time period, monitoring the energy level comprises monitoring an average value of the energy level over a second time period, and the first time period is longer than the second time period.

10. The apparatus of claim 9, wherein the apparatus comprises one of a FM audio signal demodulator and a video signal demodulator.

## Patentansprüche

1.  Verfahren zum Empfangen eines Audiosignals, wobei das Verfahren umfasst:

    Empfangen eines modulierten Signals (302);

Demodulieren des modulierten Signals zum Erhalten des Audiosignals (306);

Erkennen einer Dämpfung des empfangenen modulierten Signals; und

bei Erkennung einer Dämpfung Halten oder Filtern des Audiosignals;

wobei das Erkennen einer Dämpfung des empfangenen modulierten Signals das Überwachen eines Energiepegels (310) des empfangenen modulierten Signals und das Bestimmen umfasst, ob der Energiepegel unter einer ersten Schwelle (314) liegt, wobei die erste Schwelle auf einem Durchschnitt des Energiepegels während eines ersten Zeitraums basiert, wobei das Überwachen des Energiepegels das Überwachen eines Durchschnittswerts des Energiepegels in einem zweiten Zeitraum umfasst, und wobei der erste Zeitraum länger ist als der zweite Zeitraum.

2. Verfahren nach Anspruch 1, umfassend das Halten oder Filtern des Audiosignals, bis der Energiepegel (310) über eine zweite Schwelle ansteigt.

3. Verfahren nach Anspruch 1 oder 2, umfassend das Halten oder Filtern des Audiosignals (306) über einen festen Zeitraum.

4. Verfahren nach einem der vorhergehenden Ansprüche, wobei das empfangene modulierte Signal (302) ein frequenzmoduliertes (FM) Signal ist.

5. Verfahren nach Anspruch 4, wobei das FM-Signal auf einem Seitenband eines Videosignals übertragen wird.

6. Verfahren nach einem der vorhergehenden Ansprüche, wobei das Halten oder Filtern das Hinzufügen eines Filters (604) zu einem Signalweg umfasst.

7. Verfahren nach Anspruch 6, wobei das Hinzufügen eines Filters (604) zu einem Signalweg das Auswählen eines Wegs umfasst, der einen Filter als den Signalweg beinhaltet.

8. Verfahren nach einem der vorhergehenden Ansprüche, wobei das Halten oder Filtern das Wechseln zwischen dem Audiosignal (306) und einem gefilterten Audiosignal über einen bestimmten Zeitraum umfasst.

9. Vorrichtung zum Empfangen eines Audiosignals, wobei die Vorrichtung umfasst: Mittel, die zum Empfangen eines modulierten Signals (302) ausgelegt sind; Mittel, die zum Demodulieren des modulierten Signals zum Erhalten des Audiosignals (306) ausgelegt sind; Mittel, die zum Erkennen einer Dämpfung des empfangenen modulierten Signals ausgelegt sind; und Mittel, die zum Halten und Filtern des Audiosignals ausgelegt sind, wenn eine Dämpfung erkannt ist; wobei das Erkennen einer Dämpfung des empfangenen modulierten Signals das Überwachen eines Energiepegels (310) des empfangenen modulierten Signals und das Bestimmen umfasst, ob der Energiepegel unter einer ersten Schwelle (314) liegt, wobei die erste Schwelle auf einem Durchschnitt des Energiepegels während eines ersten Zeitraums basiert, wobei das Überwachen des Energiepegels das Überwachen eines Durchschnittswerts des Energiepegels in einem zweiten Zeitraum umfasst, und wobei der erste Zeitraum länger ist als der zweite Zeitraum.

10. Vorrichtung nach Anspruch 9, wobei die Vorrichtung eines eines FM-Audiosignal-Demodulators und eines Videosignal-Demodulators umfasst.

**Revendications**

1. Procédé de réception d'un signal audio, le procédé comprenant les étapes suivantes :

- réception d'un signal modulé (302) ;
- démodulation d'un signal modulé pour obtenir le signal audio (306) ;
- détection une atténuation du signal modulé reçu ; et
- si une atténuation est détectée, maintien ou filtrage du signal audio,

dans lequel la détection d'une atténuation du signal modulé reçu comprend la surveillance d'un niveau d'énergie (310) du signal modulé reçu et la détermination que le niveau d'énergie tombe en dessous d'un premier seuil (314), dans lequel le premier seuil est basé sur une moyenne du niveau d'énergie sur une première période de temps, la surveillance du niveau d'énergie comprend la surveillance d'une valeur moyenne du niveau d'énergie sur une seconde période de temps, et la première période de temps est plus longue que la seconde période de temps.

2. Procédé selon la revendication 1, comprenant le maintien ou le filtrage du signal audio jusqu'à ce que le niveau d'énergie (310) augmente au-dessus d'un second seuil.

3. Procédé selon la revendication 1 ou 2, comprenant le maintien ou le filtrage du signal audio (306) pendant une période fixe.

4. Procédé selon l'une quelconque des revendications précédentes, dans lequel le signal modulé reçu (302) est un signal à modulation de fréquence, FM.

5. Procédé selon la revendication 4, dans lequel le signal FM est porté sur une sous-porteuse d'un signal vidéo.

6. Procédé selon l'une quelconque des revendications précédentes, dans lequel le maintien ou le filtrage comprend l'ajout d'un filtre (604) à un chemin de signal.

7. Procédé selon la revendication 6, dans lequel l'ajout d'un filtre (604) à un chemin de signal comprend la sélection d'un chemin qui comprend un filtre comme chemin de signal.

8. Procédé selon l'une quelconque des revendications précédentes, dans lequel le maintien ou le filtrage comprend une transition entre le signal audio (306) et un signal audio filtré sur une certaine période de temps.

9. Appareil pour recevoir un signal audio, l'appareil comprenant :

- des moyens configurés de manière à recevoir un signal modulé (302) ;
- des moyens configurés de manière à démoduler le signal modulé pour obtenir le signal audio (306) ;
- des moyens configurés de manière à détecter une atténuation du signal modulé reçu ; et
- des moyens configurés de manière à maintenir ou à filtrer le signal audio si une atténuation est détectée,

dans lequel la détection d'une atténuation du signal modulé reçu comprend la surveillance d'un niveau d'énergie (310) du signal modulé reçu et la détermination que le niveau d'énergie tombe en dessous d'un premier seuil (314), dans lequel le premier seuil est basé sur une moyenne du niveau d'énergie sur une première période de temps, la surveillance du niveau d'énergie comprend la surveillance d'une valeur moyenne du niveau d'énergie sur une seconde période de temps, et la première période de temps est plus longue que la seconde période de temps.

10. Appareil selon la revendication 9, dans lequel l'appareil comprend un démodulateur de signaux audio FM ou un démodulateur de signaux vidéo.

102
104
106

100

FIG. 1

202

200

$t_0$    $t_1$

FIG. 2

FIG. 3

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4680793 A
- US 20090305653 A1
- US 20060229751 A1
- US 5261004 A